# EUROPÄISCHE PATENTSCHRIFT

(11) **EP 4 141 282 B1**
(45) Veröffentlichungstag und Bekanntmachung des Hinweises auf die Patenterteilung: **16.10.2024**
(21) Anmeldenummer: 22187500.8
(22) Anmeldetag: 28.07.2022
(51) Int. Cl.: F16D 55/226, F16D 65/097

(54) **SCHEIBENBREMSE FÜR EIN KRAFTFAHRZEUG**
DISC BRAKE FOR A MOTOR VEHICLE
FREIN À DISQUE POUR UN VÉHICULE AUTOMOBILE

(30) Priorität: 25.08.2021 DE 102021121995
(43) Veröffentlichungstag der Anmeldung: 01.03.2023
(73) Patentinhaber: ZF CV Systems Europe BV, 1170 Brüssel (BE)
(72) Erfinder: DORN, Philip, 68165 Mannheim (DE); HENNING, Paul, 68723 Schwetzingen (DE); SEIP, Mirko, 69434 Brombach (DE)
(74) Vertreter: Ohlendorf, Henrike

(56) Entgegenhaltungen:
- EP-A1- 2 997 277
- EP-A1- 3 736 462
- EP-B1- 2 997 277
- WO-A1-2017/178096
- WO-A1-2018/077728
- CN-A- 113 251 087
- DE-A1- 102009 023 104
- DE-A1- 102014 019 619
- DE-A1- 102016 124 310
- DE-A1- 102019 131 840

## Beschreibung

Die Erfindung betrifft eine Scheibenbremse für ein Kraftfahrzeug, insbesondere ein Nutzfahrzeug, mit einer Bremsscheibe, einem Bremssattel und zwei am Bremssattel zu beiden Seiten der Bremsscheibe beweglich geführten Bremsbelägen, einer Niederhalterfeder an jedem Bremsbelag, einem Niederhaltebügel zum Vorspannen der Niederhaltefeder gegen den jeweiligen Bremsbelag, und einer Spreizfeder, welche dazu eingerichtet ist, zwischen den Bremsbelägen eine Spreizkraft in einer Wirkrichtung aufzubringen und die Bremsbeläge voneinander weg zu bewegen. Die Erfindung betrifft des Weiteren ein Kit für einen Bremssattel einer Scheibenbremse.

Scheibenbremsen der vorbezeichneten Art sind beispielsweise aus WO 2017/178096 A1 bekannt, bei deren Betätigung die zu beiden Seiten einer Bremsscheibe angeordneten Bremsbeläge aufeinander zu bewegt und durch das Bewegen der Bremsbeläge in Richtung der Bremsflächen an der Bremsscheibe eine Bremswirkung erzielt ist. Nach dem Lösen der Bremse soll vermieden werden, dass die am Bremssattel der Scheibenbremse beweglich geführten Bremsbeläge, wenn auch drucklos, in schleifendem Kontakt mit den Bremsflächen der Bremsscheibe verbleiben. Zu diesem Zweck weisen die bekannten Scheibenbremsen mindestens eine Spreizfeder auf, welche dazu eingerichtet ist, zwischen den Bremsbelägen eine Spreizkraft aufzubringen und die Bremsbeläge voneinander weg zu bewegen, sodass bestenfalls der Kontakt zwischen den Bremsflächen der Bremsscheibe und den Bremsbelägen aufgehoben wird.

### Beschreibung Seite 1a

Einen weiteren Stand der Technik zeigt die WO2017178096A1, bei dem zwei Spreizfedern axial um den Niederhaltebügel geführt sind und sich über je ein L-förmiges Blech an den Niederhaltefedern abstützen. Eine unmittelbare Abstützung der Spreizfedern an den Niederhaltefedern ist nicht offenbart.

Die DE 10 2019 131 840 A1 zeigt eine Scheibenbremse mit zwei Spreizelementen, wobei die Enden der Spreizelemente in Bohrungen der Belaghaltefedern befestigt sind. Ein Schutzmechanismus gegen ein ungewolltes Brechen der Spreizfeder, zum Beispiel durch Überbelastung an den Enden der Spreizfederelemente, ist nicht vorhanden. Im Falle eines Bruchs der Spreizfeder würde diese zwischen die Bremsscheibe und dem Bremsbelag fallen und ein Verklemmen oder sogar zu einer Beschädigung der Scheibenbremse herbeiführen.

### Beschreibung Seite 2 und 3 (Reinschrift)

Die aus dem Stand der Technik bekannten Lösungen funktionieren im Allgemeinen zufriedenstellend. Jedoch kann es gelegentlich zu Beeinträchtigungen bei der auf die Bremsbeläge wirkenden Spreizkraft kommen, wenn beispielsweise die Spreizfeder die Spreizkraft unter Verwendung von mit der Spreizfeder zusammenwirkenden Kopplungsmitteln auf die Bremsbeläge und/oder die Niederhaltefeder, überträgt. Die Kopplungsmittel werden üblicherweise an einem am Bremssattel angeordneten Niederhaltebügel geführt. Unter Umständen kann es im Betrieb des Fahrzeuges an den Führungsflächen zwischen den Kopplungsmitteln und dem Niederhaltebügel, etwa aufgrund von Verschmutzungen oder Korrosion, zum Verklemmen der Kopplungsmittel in der Führung kommen. Ferner kann zum Beispiel ein Bruch einer Niederhaltefeder dazu führen, dass die Kopplungsmittel außer Eingriff mit der Niederhaltefeder gelangen sich dann von der Scheibenbremse ungewollt lösen.

Ausgehend davon lag der Erfindung die Aufgabe zugrunde, eine Scheibenbremse der eingangs bezeichneten Gattung aufzuzeigen, welche die vorstehend beschriebenen Probleme möglichst weitgehend abmildert. Insbesondere lag die Aufgabe zugrunde, eine Scheibenbremse anzugeben, die eine verbesserte Betriebssicherheit und dabei vorzugsweise unbeeinträchtigte Spreizwirkung während des Betriebes erreicht.

Die Erfindung löst die ihr zugrundeliegende Aufgabe durch eine Scheibenbremse der vorbezeichneten Gattung mit den Merkmalen des Gegenstands von Anspruch 1. Insbesondere zeichnet sich die Erfindung dadurch aus, dass die Enden der Spreizfeder direkt mit jeweils einer der Niederhaltefedern in Anlage sind.

Erfindungsgemäß wird hier der Ansatz verfolgt, die Spreizfeder nunmehr ohne Zwischenschaltung etwaiger Kopplungsmittel direkt mit der Niederhaltefeder in Wirkverbindung zu bringen. Mit der direkten Verbindung und dem so erzielten Einwirken der Spreizfeder auf die Niederhaltefeder wird die Ausgestaltung der Scheibenbremse konstruktiv vereinfacht. Zudem kann auf separate und mitunter aufwendig auszugestaltende Führung der Kopplungsmittel und deren Herstellung nunmehr verzichtet werden. Dadurch ist auch einem möglichen Verklemmen mit den Kopplungsmitteln entgegengewirkt, wodurch die Betriebssicherheit der Scheibenbremse verbessert wird.

Die Scheibenbremse kann zusätzlich eine Verliersicherung für die Spreizfeder aufweisen, die mit der Spreizfeder derart wirkverbunden ist, dass die Spreizfeder bei Wegfall der Spreizkraft an der Scheibenbremse gehalten wird.

Mithilfe der Verliersicherung wird das Abspringen bzw. Abfallen der Spreizfeder von der Scheibenbremse vermieden.Vorzugsweise erfüllt die Verliersicherung ihre Funktion, unabhängig davon, ob die Spreizfeder an der Scheibenbremse selbst bricht, also von sich aus keine Spreizkraft mehr erzeugt, oder ob eine der Niederhaltefedern an der Scheibenbremse einen Defekt aufweist, sodass trotz intakter Spreizfeder diese nicht mehr unmittelbar durch die Bremsbeläge gehalten werden und ihre Federkraft auf die voneinander weg zu bewegenden Bremsbeläge aufbringen kann. Die Spreizfeder wird mittels der Verliersicherung vorzugsweise dauerhaft sicher an der Scheibenbremse gehalten.

Die nachfolgend beschriebenen bevorzugten Ausführungsformen betreffen jeweils Weiterbildungen sowohl des ersten als auch des zweiten oben beschriebenen Aspekts.

Gemäß einer bevorzugten Ausführungsform ist vorgesehen, dass die Spreizfeder an jedem ihrer Enden einen mit den Niederhaltefedern in Kontakt bringbaren Halteabschnitt aufweist. Die Spreizfeder geht über ihren Halteabschnitt mit der Niederhaltefeder vorzugsweise eine auf Formschluss basierende Verbindung ein, wobei diese an einer Bewegung etwa quer zur erzeugten Spreizkraft und an einem ungewollten Abgleiten von der Niederhaltefeder gehindert wird. Damit ist, solange die Niederhaltefeder und/oder die Spreizfeder im intakten Zustand sind, eine dauerhaft sichere und vor allem direkte Verbindung zwischen den Enden der Spreizfeder mit den Niederhaltefedern bewirkt.

Vorzugsweise ist jeder Halteabschnitt in einem Endabschnitt der Spreizfeder angeformt und dazu eingerichtet, die Haltefeder zumindest bereichsweise zu umgreifen. Der Halteabschnitt, der vorzugsweise als Umbiegung an einem jeweiligen Endabschnitt der Spreizfeder ausgebildet ist, greift etwa an einem mittleren Abschnitt der Niederhaltefeder an. In einer bevorzugten Ausführungsform greifen die Endabschnitte der Spreizfeder an einander zugewandten seitlichen Abschnitten der an den Bremsbelägen angeordneten Niederhaltefedern an.

Der Halteabschnitt ist insbesondere dazu ausgebildet, die Niederhaltefeder seitlich an ihrer Ober- und Unterseite zu übergreifen. Der als Umbiegung ausgebildete Halteabschnitt ist wie die der Federkörper der Spreizfeder selbst aus dem Federmaterial der Spreizfeder hergestellt. Vorzugsweise ist der

### Beschreibung Seiten 5 und 6 (Reinschrift)

Halteabschnitt einteilig mit dem die Bremsbeläge der Scheibenbremse voneinander wegbewegenden Federkörper ausgebildet.

Erfindungsgemäß ist der Halteabschnitt außerhalb des Massenschwerpunktes der Spreizfeder angeordnet. Mit anderen Worten verläuft der Halteabschnitt nicht durch den Massenschwerpunkt. Damit ist erreicht, dass die Spreizfeder, insbesondere in Ausführungsformen, in denen sie als Schraubenfeder oder Blattfeder ausgebildet ist, einen Federkörper aufweist, der mit einem Versatz relativ zu den Bremsbelägen oder den Niederhaltefedern angeordnet werden kann, vorzugsweise radial außerhalb davon. Dadurch, dass die Spreizfeder zu den Niederhaltefedern versetzt angeordnet wird, kann eine vereinfachte Montage erreicht werden.

In einer bevorzugten Ausführungsform ist die Spreizfeder dazu eingerichtet, mit ihren als Umbiegung ausgebildeten Halteabschnitten in die Niederhaltefedern an den Bremsbelägen formschlüssig eingehakt zu werden. Die Halteabschnitte sind zur Längsachse des die Spreizkraft erzeugenden Federkörpers der Spreizfeder insbesondere mit einem radialen Versatz angeordnet.

Gemäß einer weiteren bevorzugten Ausführungsform weist die Scheibenbremse ferner ein Führungsteil auf, welches dazu eingerichtet ist, die Spreizfeder zumindest abschnittsweise in Wirkrichtung der Spreizkraft geführt aufzunehmen. Das Führungsteil bewirkt, dass die Spreizfeder sich ungehindert in Wirkrichtung ihrer erzeugten Spreizkraft bewegen (ausdehnen) kann. Selbst wenn etwaige Verschmutzungen an der Spreizfeder oder dem Führungsteil anhaften, wäre ein Verklemmen der Feder entlang des Führungsteils vermieden. Zudem stellt das Führungsteil an der Spreizfeder mit außerhalb des Massenschwerpunktes der Spreizfeder angeordneten Halteabschnitten sicher, dass der Federkörper der Spreizfeder nicht senkrecht zu der längs der Spreizkraft wirkenden Kraftrichtung ausweicht. Das Führungsteil wirkt somit einer unzulässigen Verformung der Spreizfeder entgegen.

Das Führungsteil ist vorzugsweise als Stabelement ausgebildet und zumindest teilweise von der Spreizfeder umgeben. Mit der Ausgestaltung des Führungsteils als Stabelement ist eine hohe Biegefestigkeit des Führungsteils erreicht. Eine außermittig wirkende Spreizkraft kann einfach aufgenommen und eine Ausweichbewegung des Federkörpers radial zur eigentlich wirkenden Federkraft abgefangen werden. Das Stabelement kann in einer Ausführungsform als Hohlkörper ausgebildet sein, dessen äußerer Durchmesser kleiner ist als der Innendurchmesser der vorzugsweise als Schraubenfeder ausgebildeten Spreizfeder.

Das Führungsteil und die Spreizfeder sind vorzugsweise in einer Ausnehmung des Niederhaltebügels zumindest in Wirkrichtung bzw. Längsrichtung der Spreizfeder beweglich angeordnet. Die Ausnehmung innerhalb des Niederhaltebügels ist insbesondere an die Abmaße von Führungsteil und Spreizfeder angepasst. Das Führungsteil und die vorzugsweise das Führungsteil mit ihrem Federkörper umgebende Spreizfeder sind im Betriebszustand der Scheibenbremse auf Höhe des Niederhaltebügels angeordnet, derart, dass das Führungsteil in seiner Bewegung in Richtung seiner Längsachse beschränkt ist.

Vorzugsweise bilden die Enden der Ausnehmung des Niederhaltebügels jeweils Bewegungsanschläge für das beweglich gelagerte Führungsteil aus. Vorliegend ist unter der Längsrichtung der Spreizfeder eine Achsrichtung zu verstehen, die im Wesentlichen parallel zu der von der Spreizfeder erzeugten Spreizkraft verläuft. Zudem verläuft auch die Längsachse des Führungsteils im Wesentlichen parallel

Erfindungsgemäß weist das Führungsteil mindestens einen Führungsdorn auf, der am Niederhaltebügel angeordnet ist und sich in einer am Niederhaltebügel ausgebildeten Ausnehmung erstreckt. In einer bevorzugten Ausführung ist genau ein Führungsdorn als Führungsteil vorgesehen, der insbesondere parallel zur Rotationachse der Bremsscheibe verläuft. Zudem erstreckt sich der Führungsdorn von einem Endbereich der Ausnehmung in Richtung des gegenüberliegenden Endbereichs der Ausnehmung am Niederhaltebügel. Vorzugsweise ist der eine Führungsdorn nur einseitig mit dem Niederhaltebügel verbunden. Das freie Ende des Führungsdorns endet vorzugsweise im Abstand von wenigen Millimetern zum nahegelegenen Endbereich der Ausnehmung. Mittels des am Niederhaltebügel angeordneten Führungsteils ist eine mögliche Ausgestaltung einer Verliersicherung für die Spreizfeder ausgebildet.

In einer weiteren bevorzugten Ausführungsform ist der Führungsdorn ein erster Führungsdorn, und das Führungsteil weist zusätzlich zum ersten Führungsdorn einen zweiten Führungsdorn auf, wobei der erste Führungsdorn und der zweite Führungsdorn sich von entgegengesetzten Enden des Niederhaltebügels aus aufeinander zu erstrecken. Vorzugsweise sind die Achsen von erstem und zweitem Führungsdorn koaxial zueinander angeordnet. Das Führungsteil wird vorzugsweise aus zwei Abschnitten gebildet, mittels denen jeweils zumindest die Endabschnitte der insbesondere auf die Niederhaltefedern einwirkenden Spreizfeder aufgenommen und abschnittsweise geführt sind. In einer Ausführungsform der Erfindung ist vorgesehen, dass die Spreizfeder mit ihren Endabschnitten anstatt auf die Niederhaltefedern direkt auf die Bremsbeläge bzw. die Belagträger der Bremsbeläge wirken.

Gemäß einer bevorzugten Ausführungsform sind der erste Führungsdorn und der zweite Führungsdorn unterschiedlich lang ausgebildet. Durch die unterschiedlich lange Ausgestaltung der Führungsdorne ist insbesondere das Montieren der Spreizfeder auf dem Führungsteil der Scheibenbremse vereinfacht. Durch die verschieden lang ausgeführten Führungsdorne muss der Federkörper der Spreizfeder beim Montieren nur um einen Bruchteil seiner Gesamtlänge gestaucht werden, damit insbesondere der zweite zu montierende Endabschnitt der Spreizfeder mit dem kürzeren Führungsdorn in Wirkverbindung gebracht werden kann.

Gemäß einer Weiterbildung der erfindungsgemäßen Scheibenbremse ist zumindest einem Ende der Spreizfeder ein Schieber zugeordnet, der entlang des Führungsteils beweglich ausgebildet ist, und vorzugsweise den Abstand zwischen dem ersten Führungsdorn und dem zweiten Führungsdorn überdeckt. Mithilfe des Schiebers, der in einer Ausgestaltung als Hülsenkörper ausgebildet und an die Abmessungen der Spreizfeder angepasst ist, wird ein Ausknicken der Spreizfeder an ihren Enden vermieden.

Vorzugsweise ist der Schieber dazu eingerichtet, die Spreizfeder und die Niederhaltefeder miteinander zu koppeln. Mit anderen Worten fungiert der Schieber als Kopplungsteil zwischen den beiden vorgenannten Elementen, wobei der Schieber eine vordefinierte Mindestlänge aufweist, um einem Verklemmen am Niederhaltebügel entgegenzuwirken.

Vorzugsweise ist jedem Ende der Spreizfeder ein solcher Schieber zugeordnet, wobei die, vorzugsweise als Schraubenfeder ausgebildete, Spreizfeder mit ihren Enden vollumfänglich an den Schiebern anliegt.

In einer bevorzugten Ausgestaltung mit zwei in einem Abstand gegenüberliegenden, aufeinander zuweisenden Führungsdornen ist der Schieber vorzugsweise dazu eingerichtet, den Abstand zwischen den Führungsdornen zu überdecken. Insbesondere in Verbindung mit der Ausgestaltung, in der der erste Führungsdorn zwischen einer Betriebsstellung und einer Montagestellung hin- und herbewegbar ist, kann der erste Führungsdorn durch den Schieber an einem ungewollten Auslenken gehindert und so in seiner Betriebsstellung gehalten werden. Damit ist die Sicherheit des aus erstem und zweitem Führungsdorn ausgebildeten Führungsteils zudem erhöht.

In einer Ausgestaltung der Scheibenbremse, in welcher mittels des Abstands zwischen dem ersten Führungsdorn und dem zweiten Führungsdorn ein Schlitz ausgebildet ist, ist der Schlitz auf der Seite der Niederhaltebügels angeordnet, welche dem relativ zum Bremssattel nicht verstellbaren Bremsbelag an der Scheibenbremse zugeordnet ist. Der den Schlitz abdeckende Schieber bewegt sich somit vorzugsweise nicht relativ zum Bremssattel.

Gemäß einer bevorzugten Weiterbildung der erfindungsgemäßen Scheibenbremse enden der erste Führungsdorn und der zweite Führungsdorn zum Einsetzen der Spreizfeder mit Abstand zueinander, wobei der Abstand zwischen den Enden von erstem und zweitem Führungsdorn vorzugsweise kleiner ist als die Blocklänge der Spreizfeder. Der Abstand zwischen den Enden und der daraus resultierende Einführspalt ist derart groß gewählt, dass eine vorzugsweise als Schraubenfeder ausgebildete Spreizfeder mit einem ihrer Enden über den Einführspalt auf einen der Führungsdorne aufgeschoben werden kann. Danach wird die Spreizfeder gestaucht, bis das entgegengesetzte Ende des Federkörpers in den Einführspalt zwischen die Enden von erstem und zweitem Führungsdorn bewegt werden kann, um die Spreizfeder dann über den kürzeren der Führungsdorne zu bewegen. Der Abstand ist kleiner als die Blocklänge der Spreizfeder, so dass sich diese in ihrem maximal komprimierten Zustand nicht unbeabsichtigt aus dem Einführspalt zwischen den Enden von erstem und zweitem Führungsdorn heraus bewegen kann. Der Abstand zwischen den Enden der Feder entspricht in einer bevorzugten Ausführungsform weniger als etwa einem Viertel der Gesamtlänge von erstem und zweitem Führungsdorn.

Gemäß einer weiteren bevorzugten Ausführungsform weist die Scheibenbremse ein die Enden von erstem und zweitem Führungsdorn miteinander verbindendes Passteil mit Halterungen zum Befestigen am ersten und zweiten Führungsdorn auf. Mittels des zwischen die freien Enden von erstem und zweitem Führungsdorn einsetzbaren Passteils ist ein Ausknicken der Spreizfeder im Bereich zwischen den Enden von erstem und zweitem Führungsdorn des Führungsteils entgegengewirkt. Das Passteil wird vorzugsweise koaxial zu den Führungsdornen ausgerichtet und liegt jeweils an den freien Enden von erstem und zweitem Führungsdorn an. Das Passteil ist zudem jeweils mit Abschnitten von erstem und zweitem Führungsdorn übergreifenden Halterungen ausgerüstet. Mittels der Halterungen wird das Passteil an den Führungsdornen befestigt.

In einer Ausführungsform der Erfindung können der erste und der zweite Führungsdorn bei Verwendung eines solchen Passteils gleich lang ausgebildet sein. Das Passteil kann beispielsweise ein zu einem Hülsenkörper gebogenes Blechteil sein, dessen Halterungen außenseitig an einem Abschnitt des ersten und des zweiten Führungsdorns befestigt werden.

Eine bevorzugte Weiterbildung der Erfindung sieht vor, dass zumindest der erste oder zweite Führungsdorn zwischen einer Betriebsstellung und einer Montagestellung zum Montieren des Federelementes hin und her bewegbar ist. Damit ist das Montieren der Spreizfeder an der Scheibenbremse vereinfacht. Anstatt einen ausreichend großen Abstand zwischen den vorzugsweise koaxial zueinander verlaufenden Führungsdornen vorzusehen, um die Spreizfeder mit dem Führungsteil in Wirkverbindung zu bringen, kann der Abstand in dieser Ausführung einen Schlitz definieren, der beispielsweise nur wenige (einstellige) Millimeter groß sein kann. Insbesondere ist der Führungsdorn bewegbar ausgebildet, wenn das Führungsteil für die Spreizfeder nur einen Führungsdorn aufweist.

Gemäß einer bevorzugten Ausführungsform ist zumindest ein Abschnitt des bewegbaren Führungsdorns plastisch oder elastisch verformbar. Bei einem plastisch verformbar ausgebildeten Abschnitt des Führungsdorns wird der bewegbare Führungsdorn aus der Betriebsstellung in die Montagestellung überführt und verbleibt in unveränderter Ausrichtung in der Montagestellung. Um den Führungsdorn in die Betriebsstellung zurückzuführen, ist dieser gezielt von der Montagestellung in die Betriebsstellung insbesondere zurückzubiegen, wobei wiederum eine plastische Verformung zumindest eines Abschnittes des Führungsteils erfolgt.

Bei einem elastisch verformbar ausgebildeten Abschnitt des Führungsdorns, was eine alternative Ausgestaltung des Führungsteils darstellt, wird der Führungsdorn durch Aufbringen einer Ausrückkraft quer zu seiner Längserstreckung aus der Betriebsstellung bewegt und muss durch Aufrechterhalten der Ausrückkraft in der Montagestellung gehalten werden, während die Spreizfeder auf den Führungsdorn geschoben wird. Nach Wegfall der Ausrückkraft bewegt sich der elastisch verformbare Führungsdorn selbsttätig in die Betriebsstellung zurück.

Eine Weiterbildung der Scheibenbremse sieht ferner eine Abdeckung vor, die dazu eingerichtet ist, die Spreizfeder an dem Niederhaltebügel zumindest abschnittsweise zu überdecken. Mithilfe der Abdeckung, die bevorzugt im montierten Zustand der Spreizfeder zumindest bereichsweise unmittelbar oberhalb der Spreizfeder angeordnet ist, wird ein zwischen den Enden des Führungsteils erstreckender Abschnitt der Spreizfeder durch die darüber angeordnete Abdeckung in Position gehalten. Insbesondere ein Ausknicken der insbesondere ungleichmäßig belasteten Spreizfeder quer zur durch die Spreizfeder erzeugten Spreizkraft ist vermieden. Zudem ist durch die Abdeckung eine alternative Ausgestaltung einer Verliersicherung geschaffen. Darüber hinaus ist mithilfe der Abdeckung der Schutz der Spreizfeder vor äußeren Umwelteinflüssen, wie Schmutz oder Feuchtigkeit, bewirkt, wodurch die Langzeitfunktion der Spreizfeder verbessert wird.

Vorzugsweise ist die Abdeckung an dem Niederhaltebügel mit geeigneten Befestigungsmitteln, wie beispielsweise einer oder mehreren Befestigungsschrauben, befestigt. Die Abmessungen der Abdeckung sind derart gewählt, dass vorzugsweise neben der Spreizfeder und dem Führungsteil auch die Ausnehmung am Niederhaltebügel überdeckt wird, innerhalb der sich Teile des Führungsteils, insbesondere der erste und zweite Führungsdorn, erstrecken, und die Spreizfeder angeordnet ist.

Gemäß einer bevorzugten Ausführungsform der Scheibenbremse ist die Abdeckung Teil einer den Bremssattel auf seiner Oberseite abschirmenden Abdeckkappe. Vorzugsweise ist die Abdeckkappe dazu eingerichtet, die Oberseite des Bremssattels nahezu vollständig abzudecken. Umwelteinflüsse werden so nicht nur von der Spreizfeder und das die Spreizfeder aufnehmende Führungsteil ferngehalten, sondern deren Einfluss auch auf den gesamten Bremssattel einschließlich der am Bremssattel beweglich geführten Bremsbeläge, verringert. Vorzugsweise ist die Abdeckung für die Spreizfeder einteilig in die Abdeckkappe integriert.

Die Erfindung betrifft in einem weiteren Aspekt ein Kit für einen Bremssattel einer Scheibenbremse nach einer der vorstehend oben beschriebenen bevorzugten Ausführungsformen.

Die Erfindung löst die eingangs bezeichnete Aufgabe, indem das Kit einen Niederhaltebügel, eine Spreizfeder, deren Enden dazu eingerichtet sind, direkt mit jeweils einer Niederhaltefeder in Anlage gebracht zu werden, und ein die Spreizfeder zumindest abschnittsweise in Längsrichtung aufnehmendes Führungsteil aufweist. In einer bevorzugten Ausführungsform ist das die Spreizfeder aufnehmende Führungsteil als Einzelteil zum Niederhaltebügel ausgebildet. Das Führungsteil ist als Stabelement ausgebildet und wird zumindest abschnittsweise von der Spreizfeder umgeben.

In einer alternativen Ausführungsform ist das Führungsteil einteilig mit dem Niederhaltebügel ausgebildet und weist zumindest einen ersten Führungsdorn auf, entlang dem sich die Spreizfeder erstreckt. Mittels der einteiligen Ausgestaltung des Führungsteils am Niederhaltebügel ist eine mögliche Ausgestaltung einer Verliersicherung für die Spreizfeder an der erfindungsgemäßen Scheibenbremse verwirklicht.

Die zu den erfindungsgemäßen Scheibenbremsen von erstem und zweitem Aspekt beschriebenen Vorteile und bevorzugten Ausführungsformen sind zugleich auch Vorteile und bevorzugte Ausführungsformen des Kits gemäß dem weiteren Aspekt und umgekehrt, wobei insbesondere das Kit als Austauschteil in Verbindung mit einer Reparatur- oder Instandhaltungsmaßnahme an einer erfindungsgemäßen Scheibenbremse eines Nutzfahrzeuges verwendet werden kann und soll.

Die in der Beschreibung, in den Zeichnungen sowie in den Ansprüchen offenbarten Merkmale der Erfindung können sowohl einzeln als auch in beliebiger Kombination miteinander für die Weiterbildung der Erfindung wesentlich sein, sofern sie sich technisch nicht widersprechen.

Die Erfindung wird im Folgenden anhand verschiedener Ausführungsbeispiele unter Bezugnahme auf die beigefügten Figuren näher beschrieben. Hierbei zeigen:
- Fig. 1:: eine erste Ausführungsform einer erfindungsgemäßen Scheibenbremse;
- Fig. 2:: eine Schnittdarstellung der Scheibenbremse nach Fig. 1;
- Fig. 3:: eine perspektivische Explosionsdarstellung einer erfindungsgemäßen Ausführungsform eines Niederhaltebügels, einer Spreizfeder und eines Führungsteils nach Fig. 1 und 2;
- Fig. 4:: eine perspektivische Ansicht einer weiteren Ausführungsform einer erfindungsgemäßen Scheibenbremse;
- Fig. 5:: eine Schnittdarstellung der Scheibenbremse nach Fig. 4;
- Fig. 6:: eine perspektivische Explosionsdarstellung eines Niederhaltebügels mit einem daran ausgebildeten Führungsteil und einer Spreizfeder nach Fig. 4 und 5;
- Fig. 7:: eine perspektivische Ansicht einer weiteren Ausführungsform einer erfindungsgemäßen Scheibenbremse;
- Fig. 8:: eine Schnittdarstellung der Scheibenbremse nach Fig. 7;
- Fig. 9:: eine perspektivische Explosionsdarstellung eines erfindungsgemäßen Niederhaltebügels mit einer daran einzusetzenden Spreizfeder und einem Passteil;
- Fig. 10 und 11:: Ansichten einer weiteren Ausführungsform eines erfindungsgemäßen Niederhaltebügels mit daran ausgebildetem Führungsteil und zu montierender Spreizfeder als Schnittdarstellung;
- Fig. 12 und 13:: Ansichten einer weiteren Ausführungsform eines erfindungsgemäßen Niederhaltebügels mit am Führungsteil montierter Spreizfeder und Schiebern in einer perspektivischen Ansicht und einer Schnittdarstellung;
- Fig. 14:: eine perspektivische Ansicht einer weiteren erfindungsgemäßen Ausführungsform einer Scheibenbremse;
- Fig. 15:: eine Schnittdarstellung der Scheibenbremse nach Fig. 14;
- Fig. 16:: eine perspektivische Explosionsdarstellung eines weiteren Ausführungsbeispiels eines Niederhaltebügels mit daran ausgebildetem Führungsteil, einer Spreizfeder und einer an dem Niederhaltebügel montierbaren Abdeckung; und
- Fig. 17:: eine perspektivische Explosionsdarstellung des Niederhaltebügels und der Spreizfeder nach Fig. 16 mit einer alternativ zur Abdeckung an dem Niederhaltebügel zu montierenden und die Oberseite des Bremssattels abdeckenden Abdeckkappe.

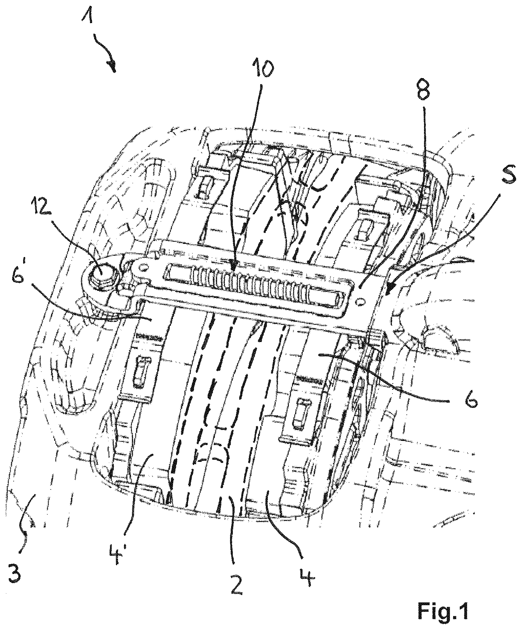

Fig. 1 zeigt eine Scheibenbremse 1 für ein Nutzfahrzeug mit einer Bremsscheibe 2 und einem Bremssattel 3. Am Bremssattel 3 sind zu beiden Seiten der Bremsscheibe 2 ein Paar Bremsbeläge 4, 4' beweglich geführt, die bei Betätigung der Bremse eine Bremskraft auf Bremsflächen der Bremsscheibe 2 aufbringen. Während der Betätigung der Bremse werden die Bremsbeläge 4, 4' aufeinander zu bewegt.

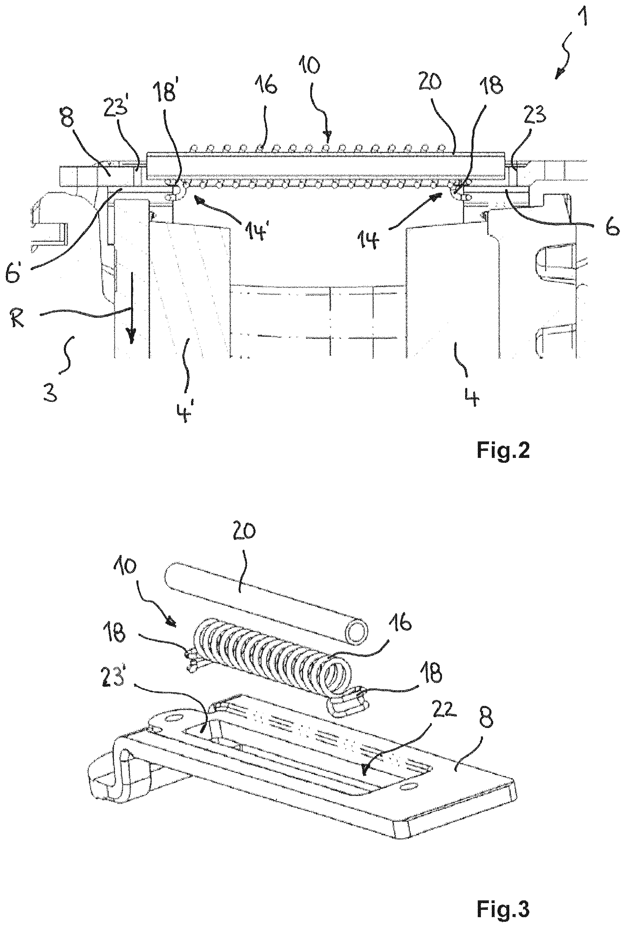

Die Scheibenbremse 1 umfasst ferner Niederhaltefedern 6, 6', wobei jeweils eine Niederhaltefeder 6, 6' an einem Bremsbelag 4, 4' angeordnet ist. Die Scheibenbremse 1 umfasst zudem einen Niederhaltebügel 8, der dazu eingerichtet ist, die Niederhaltefedern 6, 6' gegen jeweils den ihr zugeordneten Bremsbelag 4, 4' vorzuspannen, insbesondere in radialer Richtung R (Fig. 2) in Bezug auf eine nicht näher dargestellte Rotationsachse der Bremsscheibe 2.

An der Scheibenbremse 1, insbesondere dem Niederhaltebügel 8, ist ferner eine Spreizfeder 10 vorgesehen, welche dazu eingerichtet ist, zwischen den Bremsbelägen 4, 4' eine Spreizkraft aufzubringen und die Bremsbeläge nach der Bremsenbetätigung voneinander weg zu bewegen. Vorzugsweise wirkt die Spreizfeder 10 derart, dass der Kontakt zwischen den Bremsflächen der Bremsscheibe 2 und den Bremsbelägen 4, 4' aufgehoben wird.

Der Niederhaltebügel 8 ist in der vorliegenden Ausführungsform an einem Ende einer Steckaufnahme S gehalten und am entgegengesetzten Ende mit einer Befestigungsschraube 12 am Bremssattel 3 gesichert.

Wie aus Fig. 2 ersichtlich, weist die Spreizfeder 10 zwei Enden 14, 14' auf, die jeweils direkt mit einer der Niederhaltefedern 6, 6' in Anlage sind und die vom Federkörper 16 der Spreizfeder 10 erzeugte Spreizkraft ohne Zwischenschaltung etwaiger Kopplungsmittel auf die Niederhaltefedern 6, 6' übertragen.

Zum Übertragen der durch den Federkörper 16 der Spreizfeder 10 erzeugten Spreizkraft weist die Spreizfeder an jedem ihrer Enden 14, 14' einen Halteabschnitt 18, 18' auf, wobei die Halteabschnitte 18, 18' mit einer jeweils zugeordneten Niederhaltefeder 6, 6' in Kontakt sind. In der gezeigten Ausführungsform ist jeder Halteabschnitt 18, 18' in einem Endabschnitt der Spreizfeder 10 angeformt. Zudem übergreift die gezeigte Ausführungsform die Niederhaltefeder 6, 6' zumindest bereichsweise seitlich an ihrer Ober- und Unterseite.

Die Scheibenbremse 1 weist ferner ein Führungsteil 20 auf, mittels dem die Spreizfeder 10 zumindest abschnittsweise in Wirkrichtung der Spreizkraft geführt wird. In der gezeigten Ausführungsform sind die Halteabschnitte 18, 18' außerhalb des Massenschwerpunktes der Spreizfeder 10 angeordnet. Die von dem Federkörper 16 erzeugte Spreizkraft wirkt somit außermittig an den Niederhaltefedern 6, 6`, so dass die Spreizfeder mittels des Führungsteils 20 quer zur Wirkrichtung der Spreizkraft in ihrer Längsausrichtung gehalten wird.

Fig. 3 zeigt eine perspektivische Explosionsdarstellung des Niederhaltebügels 8, der Spreizfeder 10 und eines Führungsteils 20. Alle drei Bauteile sind separat zueinander ausgebildet und stellen in der vorliegenden Ausführungsform Einzelkomponenten der erfindungsgemäßen Scheibenbremse 1 dar.

In der gezeigten Ausführung ist die Spreizfeder 10 als Schraubenfeder ausgebildet. Das Führungsteil 20 ist ein Stabelement, welches zumindest teilweise von der Spreizfeder 10 umgeben, insbesondere umwickelt, ist. Das Führungsteil 20 und die Spreizfeder 10 sind in einer Ausnehmung 22 des Niederhaltebügels 8 beweglich aufgenommen. Das Führungsteil 20 ist mit seiner Längsachse versetzt zum Niederhaltebügels 8 angeordnet. Die gegenüberliegenden Enden 23, 23' der Ausnehmung 22, die einen rechteckigen Grundform hat, bilden jeweils einen Bewegungsanschlag für das Führungsteil 20.

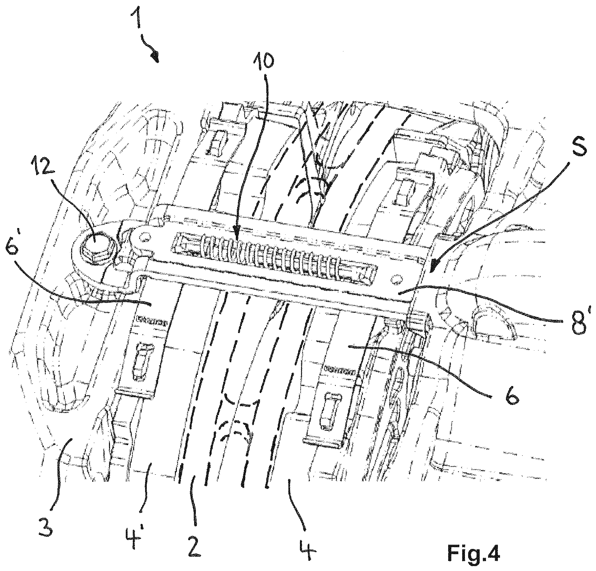

Fig. 4 zeigt eine weitere erfindungsgemäße Ausführungsform einer Scheibenbremse 1. Hinsichtlich der grundlegenden Ausgestaltung und Funktionsweise dieses Ausführungsbeispiels wird auf die Ausführungen zu der in Fig. 1 gezeigten Ausführungsform einer erfindungsgemäßen Scheibenbremse verwiesen.

Auch die in dieser Ausführungsform gezeigte Spreizfeder 10 kommt unmittelbar in Anlage mit den Niederhaltefedern 6, 6' der Scheibenbremse 1. Die Scheibenbremse 1 umfasst einen Niederhaltebügel 8', an dem im Gegensatz zur ersten Ausführungsform ein mit dem Niederhaltebügel 8' einteilig ausgebildetes Führungsteil 20` vorgesehen ist. An dem Niederhaltebügel 8` ist eine Ausnehmung 22' vorgesehen, innerhalb der das Führungsteil sich parallel zur Längsrichtung der Ausnehmung 22' erstreckend angeordnet ist.

In einer Ausführung weist das Führungsteil 20`einen ersten Führungsdorn 24 und einen zweiten Führungsdorn 26 auf, die sich von entgegengesetzten Enden 23, 23' der Ausnehmung 22' aus aufeinander zu erstrecken. Die Spreizfeder 10 ist von dem ersten Führungsdorn 24 und dem zweiten Führungsdorn 26 aufgenommen. Der erste und zweite Führungsdorn 24, 26 erstrecken sich entlang eines Abschnittes innerhalb der Spreizfeder 10. Mittels des mit dem Niederhaltebügel 8' einteilig ausgebildeten Führungsteils 20` ist neben einer Führung eine Verliersicherung für die Spreizfeder 10 vorhanden. Damit wird die Spreizfeder 10 auch bei Wegfall der Spreizkraft dauerhaft an der Bremse 1 gehalten.

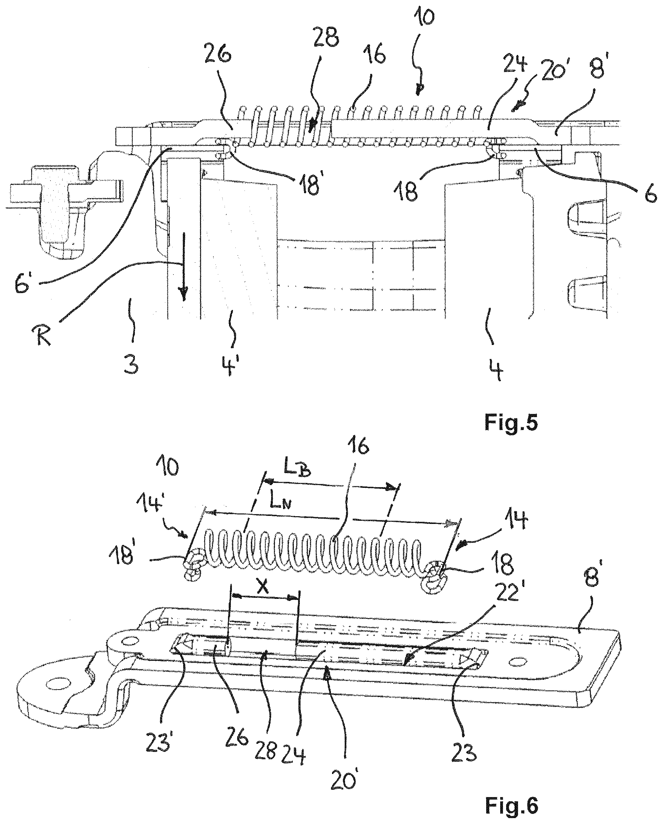

Wie aus Fig. 5 und 6 ersichtlich, enden der erste Führungsdorn 24 und der zweite Führungsdorn 26 in einem vorgegebenen Abstand X zueinander und bilden einen Einführspalt 28 für die Spreizfeder 10 aus. Der Einführspalt 28 macht es möglich, dass die Spreizfeder mit einem Ende über den ersten Führungsdorn 24 und dann das gegenüberliegende Ende der Spreizfeder 10 auf den zweiten Führungsdorn 26 zu schieben. Zudem weisen die Längsachsen der Führungsdorne 24, 26 einen Versatz zur Ebene des Niederhaltebügels 8' auf.

Wie aus den Figuren 5 und 6 ferner ersichtlich, sind der erste und der zweite Führungsdorn 24, 26 unterschiedlich lang. Der Einführspalt 28 ist somit versetzt zu den Enden 23, 23' der Ausnehmung 22' angeordnet. Die Spreizfeder 10 wird wiederum durch das außermittige Angreifen ihrer Halteabschnitte 18, 18' außermittig belastet. Dem Ausknicken der Spreizfeder 10 wird vorliegend durch den ersten und zweiten Führungsdorn 24, 26 des Führungsteils 20 entgegengewirkt.

Fig. 6 verdeutlicht, dass die Spreizfeder 10 eine Normallänge L_{N} hat, in der die Spreizfeder 10 nicht komprimiert ist. Die Spreizfeder 10 hat ferner eine Blocklänge L_{B}, welche der Länge der Spreizfeder 10 in ihrem maximal komprimierten Zustand entspricht. Der Abstand X zwischen den Enden von erstem und zweitem Führungsdorn 24, 26 ist kleiner als die Blocklänge L_{B} der Spreizfeder 10, so dass sich diese, selbst wenn maximal komprimiert, nicht aus dem Einführspalt 28 heraus bewegen kann.

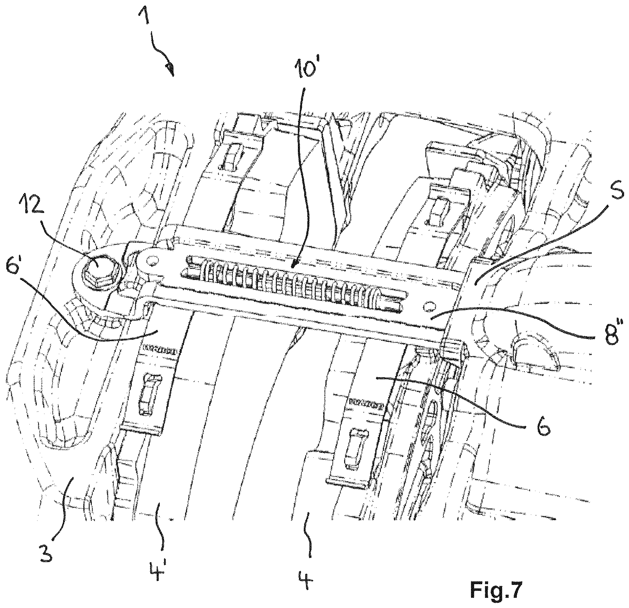

Fig. 7 zeigt eine weitere Ausführungsform einer erfindungsgemäßen Scheibenbremse 1, auf deren grundsätzliche Ausgestaltung und Funktion auf die Ausführungen zu Fig. 1 verwiesen wird. Am Bremssattel 3 ist wiederum ein Niederhaltebügel 8" mit einem wiederum einteilig am Niederhaltebügel 8" ausgebildeten Führungsteil 20" angeordnet. Das Führungsteil 20` in der Ausnehmung 22' weist einen ersten Führungsdorn 24' und einen zweiten Führungsdorn 26' auf.

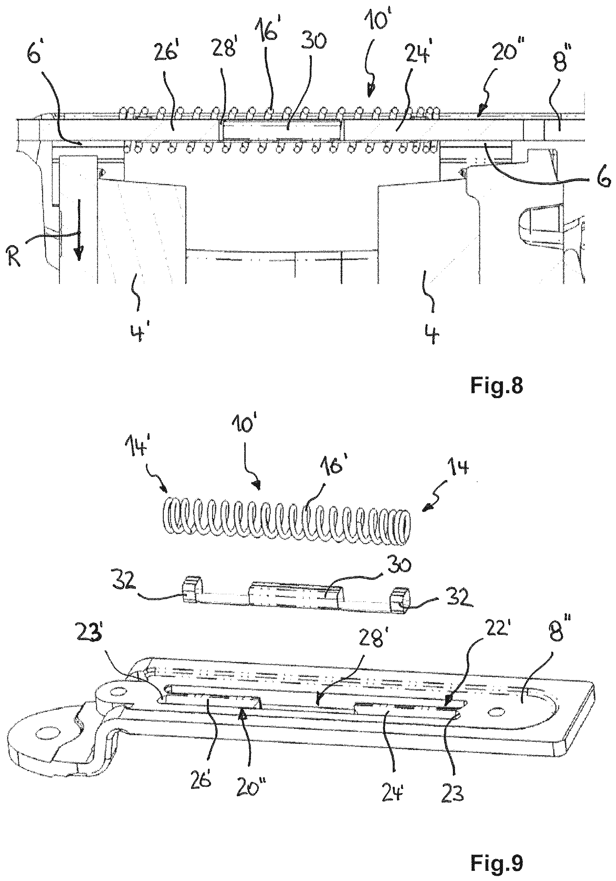

Wie die Figuren 8 und 9 verdeutlichen, sind der erste Führungsdorn 24' und der zweite Führungsdorn 26' gleich lang, wobei zwischen die freien Enden von erstem und zweitem Führungsdorn 24', 26' ein Passteil 30 eingesetzt ist, das einen zwischen den Enden der Führungsdorne 24', 26' vorhandenen Einführspalt 28` ausfüllt.

Am Niederhaltebügel und seinem Führungsteil 20" ist eine Spreizfeder 10' aufgenommen, deren Enden 14, 14' im Gegensatz zur vorbeschriebenen Ausführungsform ohne am Federkörper 16' ausgebildete Halteabschnitte an den Niederhaltefedern angreifen. Im Gegensatz zur vorherigen Ausführung verläuft das Führungsteil 20" in der Ausnehmung 22' mit seinen Führungsdornen 24', 26' in einer Ebene mit dem Niederhaltebügel 8". Auch mit dem Führungsteil 20", das einteilig mit dem Niederhaltebügel 8" ausgebildet ist, ist eine Verliersicherung an der erfindungsgemäßen Scheibenbremse für die Spreizfeder 10' verwirklicht.

Das zwischen den Enden angeordnete und den Einführspalt 28` ausfüllende Passteil 30 ist bevorzugt aus einem gebogenen Blechteil hergestellt, das an seinen Enden jeweils Halterungen 32 zum Befestigen am ersten und zweiten Führungsdorn 24', 26' aufweist. Mit dem Passteil 30 wird verstärkt einem Ausknicken der außermittig zusammengedrückten Spreizfeder 10' entgegengewirkt.

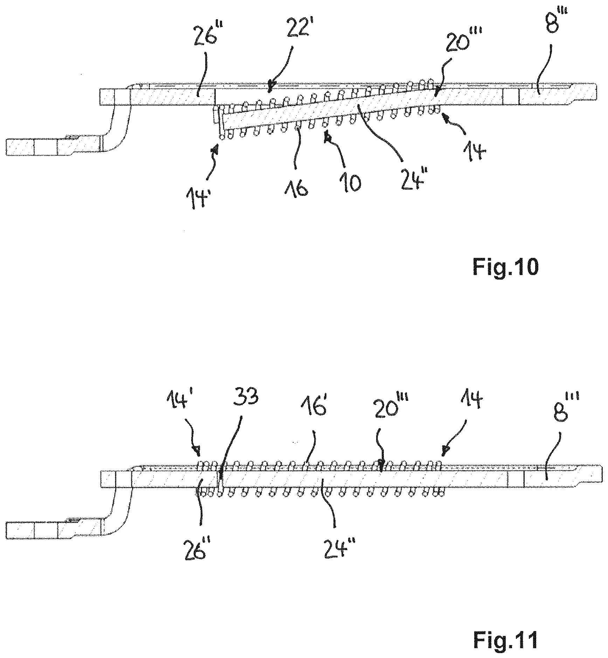

Die Figuren 10 und 11 zeigen eine weitere Ausführungsform eines erfindungsgemäßen Niederhaltebügels 8‴. Der Niederhaltebügel 8‴ weist ein in einer Ausnehmung 22' verlaufendes Führungsteil 20‴ auf, das aus zumindest einem ersten Führungsdorn 24" und einem zweiten Führungsdorn 26" ausgebildet ist. Im Gegensatz zu den vorherigen Ausgestaltungen enden die Führungsdorne 24", 26"in einem geringen Abstand zueinander, der einen Schlitz 33 von wenigen Millimetern definiert.

Um eine Spreizfeder 10' an dem erfindungsgemäßen Niederhaltebügel montieren zu können, ist wenigstens einer der Führungsdorne 24", 26", vorliegend der erste Führungsdorn 24", zwischen einer in Fig. 11 gezeigten Betriebsstellung und einer in Fig. 10 gezeigten Montagestellung zum Montieren der Spreizfeder hin- und herbewegbar. Mindestens ein Abschnitt des ersten Führungsdorns 24" ist dazu plastisch oder elastisch verformbar ausgebildet. Zum Montieren der Spreizfeder 10 wird der erste Führungsdorn 24" durch eine Ausrückkraft, die quer zur Längserstreckung des Führungsdorns 24" wirkt, aus der Ebene des Niederhaltebügels 8‴ herausbewegt. Nach dem Aufschieben des Endes 14 der Spreizfeder 10' und dem Stauchen der Spreizfeder 10` wird der erste Führungsdorn 24" wieder in die Ebene des Niederhaltebügels 8‴ zurückbewegt und das andere Ende 14 über den zweiten Führungsdorn 26" bewegt.

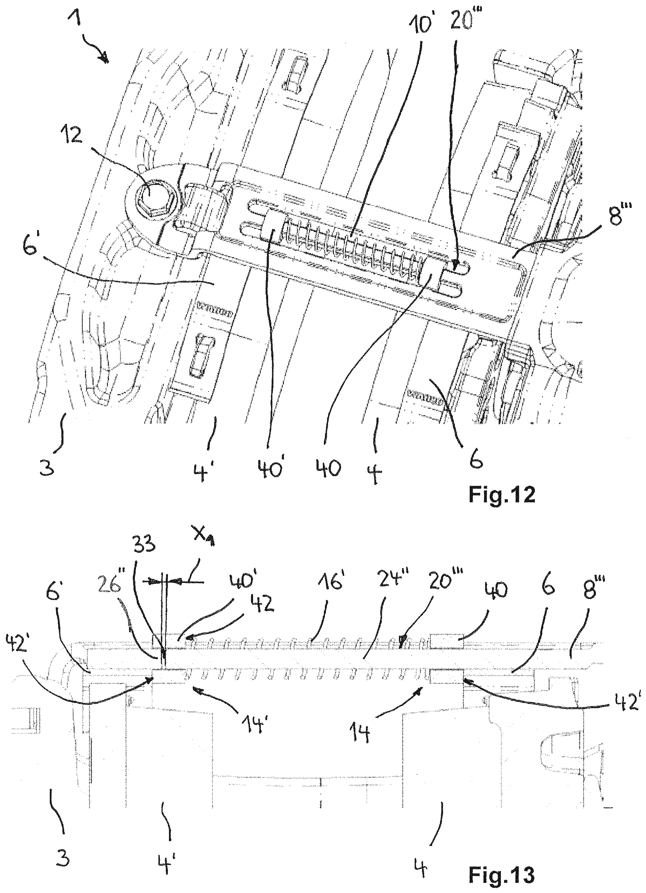

In Fig. 12 ist eine weitere Ausführungsform einer erfindungsgemäßen Scheibenbremse 1 gezeigt, die eine Weiterbildung der in den Fig. 10 und 11 gezeigten Ausführungsform des Niederhaltebügels 8‴ betrifft. Zur grundsätzlichen Ausgestaltung und Funktion dieser Ausführung wird auf die obigen Ausführungen zu Fig. 1 verwiesen.

Anstelle einer direkt mit einer jeweiligen Niederhaltefeder 6, 6' in Anlage stehenden Spreizfeder 10' ist den Enden 14, 14' der Spreizfeder 10' jeweils ein Schieber 40, 40' zugeordnet. Die Schieber 40, 40`, welche in der vorliegenden Ausführungsform als eine Art Hülsenkörper ausgebildet und entlang des Führungsteiles 20‴ geführt sind, dienen als Verbindungsmittel zwischen der Spreizfeder 10' und den Niederhaltefedern 6, 6' an den Bremsbelägen 4, 4`. Über die Schieber 40, 40' ist über den Umfang der als Schraubenfeder ausgebildeten Spreizfeder 10` eine gleichmäßige verteilte Kraftwirkung erreicht. Die Enden 14, 14' der Spreizfeder 10' liegen vollumfänglich an einer Stirnseite 42 des Schiebers 40 an (Fig. 13). Die gegenüberliegende Stirnseite 42' ist in Anlage mit der jeweiligen Niederhaltefeder 6, 6'.

Wie aus Fig. 13 weiterhin ersichtlich, weist jeder Schieber 40, 40' eine Mindestlänge auf, die einem Verklemmen oder Verkanten aufgrund von Reibung entlang des Führungsteils 20‴ entgegenwirkt. Auch die in Fig. 13 gezeigte Ausgestaltung weist einen ersten Führungsdorn 24" und einen zweiten Führungsdorn 26" unterschiedlicher Länge auf. Zumindest der erste Führungsdorn 24" ist plastisch oder elastisch verformbar ausgebildet. Der erste Führungsdorn 24" und der zweite Führungsdorn 26" enden in einem geringen Abstand X₁ zueinander, wobei der durch den Abstand gebildete Schlitz 33, wie Fig. 13 zeigt, unter dem Schieber 40' positioniert ist. In der Betriebsstellung des ersten Führungsdorns 24' sichert der Schieber 40' den Führungsdorn 24" an einer Bewegung aus der Achse des Führungsteils 20‴ heraus.

Der Schlitz 33 zwischen den Führungsdornen 24" und 26" ist auf der Seite des Niederhaltebügels 8‴ angeordnet, der der Niederhaltefeder 6' und damit dem relativ zum Bremssattel 3 unbeweglichen Bremsbelag 4' zugeordnet. Das Führungsteil 20‴ weist in der vorliegenden Ausführungsform einen rechteckigen Querschnitt auf.

Durch die im geringen Abstand X₁ zueinander endenden Führungsdorne und den den Schlitz 33 zwischen den Führungsdornen 24", 26" überdeckenden Schieber 40' ist eine Ausgestaltung einer Verliersicherung verwirklicht.

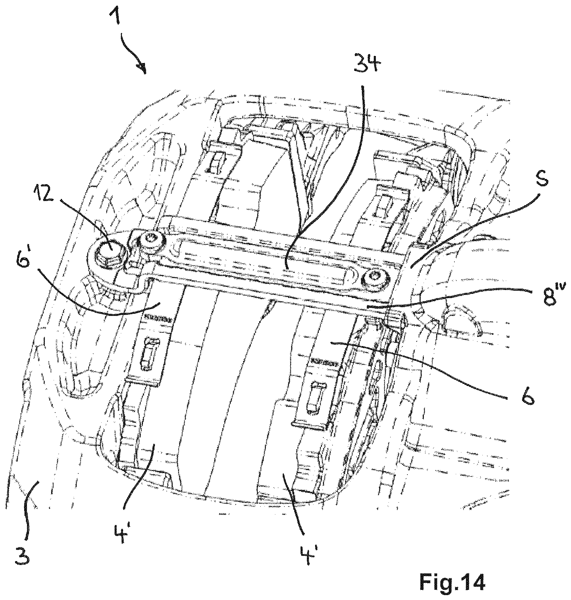

Fig. 14 zeigt eine weitere Ausführungsform einer erfindungsgemäßen Scheibenbremse 1. Zu der konkreten Ausgestaltung und Funktionsweise wird wiederum auf die Ausführungen zu der in Fig. 1 gezeigten Ausführungsform verwiesen.

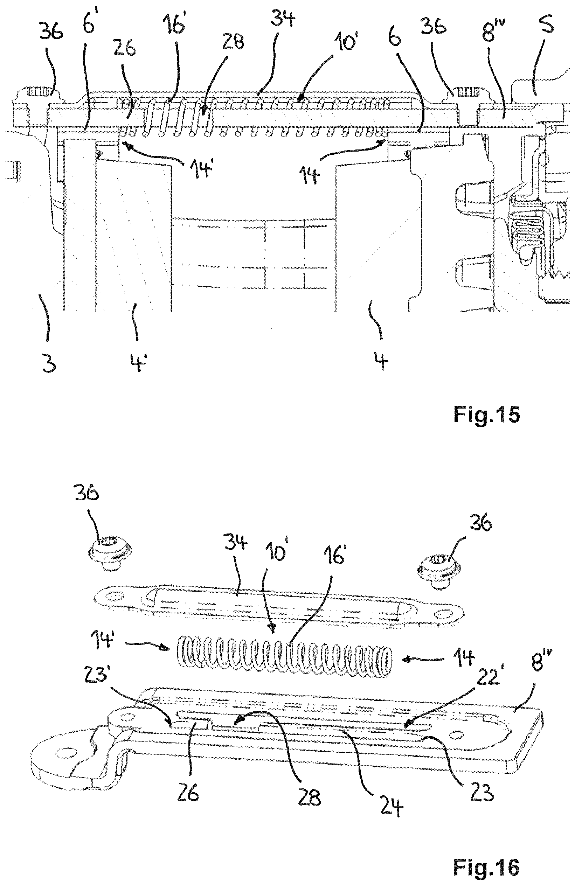

Die Scheibenbremse 1 weist, wie aus den Fig. 14 bis 16 ersichtlich, einen Niederhaltebügel 8^{IV} auf, an dem zusätzlich eine Abdeckung 34 für die Spreizfeder vorgesehen ist, mittels der die am Niederhaltebügel 8^{IV} aufgenommene Spreizfeder 10` zumindest abschnittsweise überdeckt wird. Die Spreizfeder 10 greift mit ihren Enden direkt an einer der Niederhaltefedern 6, 6' an. Das die Spreizfeder 10' führende Führungsteil 20' weist wiederum einen ersten Führungsdorn 24 und einen zweiten Führungsdorn 26 auf, die wiederum in einer Ebene mit dem Niederhaltebügel 8^{IV} verlaufen und sich von entgegengesetzten Enden 23, 23' der Ausnehmung 22' aus aufeinander zu erstrecken.

Der erste und zweite Führungsdorn 24, 26 sind unterschiedlich lang und enden in einem vorbestimmten Abstand zueinander, wodurch ein Einführspalt 28 für die Spreizfeder 10' vorhanden ist. Mithilfe der Abdeckung 34 ist ähnlich wie mit dem zwischen den Enden der Führungsdorne zu positionierenden Passteil 30 erreicht, das die Spreizfeder 10', obwohl von dieser außermittig eine Spreizkraft übertragen wird, diese nicht quer zu ihrer Längsrichtung ausknickt. Die Abdeckung 34 ist über entsprechende Befestigungsmittel 36 am Niederhaltebügel 8^{IV} befestigt.

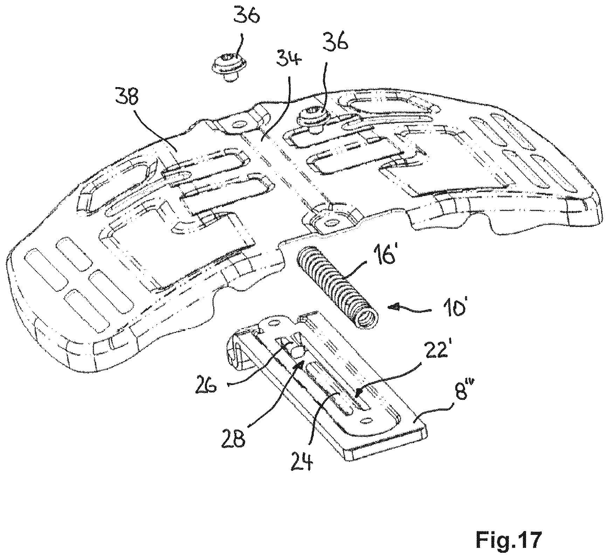

In einer in Fig. 17 gezeigten Ausführungsform ist die Abdeckung 34 Teil einer Abdeckkappe 36 für den Bremssattel 3, wobei die Abdeckkappe 36 die Oberseite des Bremssattels 3 nahezu vollständig abdeckt. Die Abdeckkappe 38 wird in ähnlicher Weise wie die Abdeckung 34 mittels zwei an dem Niederhaltebügel 8^{IV} befestigbaren Befestigungsmitteln 36 gesichert.

### Bezugszeichenliste (Bestandteil der Beschreibung)

- 1: Scheibenbremse
- 2: Bremsscheibe
- 3: Bremssattel
- 4, 4`: Bremsbeläge
- 6, 6`: Niederhaltefeder
- 8 - 8^{IV}: Niederhaltebügel
- 10, 10': Spreizfeder
- 12: Befestigungsschraube
- 14, 14': Ende
- 16, 16': Federkörper
- 18, 18': Halteabschnitt
- 20 - 20‴: Führungsteil
- 22, 22': Ausnehmung
- 23, 23': Ende Ausnehmung
- 24, 24', 24": erster Führungsdorn
- 26, 26`, 26": zweiter Führungsdorn
- 28, 28': Einführspalt
- 30: Passteil
- 32: Halterung
- 33: Schlitz
- 34: Abdeckung
- 36: Befestigungsmittel
- 38: Abdeckkappe
- 40, 40': Schieber
- 42, 42`: Stirnseite
- L_{B}: Blocklänge der Feder
- L_{N}: Normallänge der Feder
- R: Radialrichtung
- S: Steckaufnahme
- X, X₁: Abstand

## Patentansprüche

1. Scheibenbremse (1) für ein Kraftfahrzeug, insbesondere ein Nutzfahrzeug, mit
einer Bremsscheibe (2),
einem Bremssattel (3) und zwei am Bremssattel (3) zu beiden Seiten der Bremsscheibe (2) beweglich geführter Bremsbeläge (4, 4'),
einer Niederhaltefeder (6, 6') an jedem Bremsbelag (4, 4'),
einem Niederhaltebügel (8 - 8^{IV}) zum Vorspannen der Niederhaltefedern (6, 6') gegen den jeweiligen Bremsbelag (4, 4'), und
einer Spreizfeder (10, 10'), welche dazu eingerichtet ist, zwischen den Bremsbelägen (4, 4') eine Spreizkraft in einer Wirkrichtung aufzubringen und die Bremsbeläge (4, 4') voneinander weg zu bewegen,
wobei die Enden der Spreizfeder (10, 10') direkt mit jeweils einer der Niederhaltefedern (6, 6') in Anlage sind,wobei die Scheibenbremse ein Führungsteil (20 - 20‴) aufweist, welches dazu eingerichtet ist, die Spreizfeder (10, 10') zumindest abschnittsweise in Wirkrichtung der Spreizkraft geführt aufzunehmen, **dadurch gekennzeichnet, dass** das Führungsteil (20' - 20‴) mindestens einen ersten Führungsdorn (24 - 24") aufweist, der am Niederhaltebügel (8' - 8^{IV}) angeordnet ist und sich in einer Ausnehmung (22') am Niederhaltebügel (8' - 8^{IV}) erstreckt.

2. Scheibenbremse nach Anspruch 1,
**dadurch gekennzeichnet, dass** die Spreizfeder (10, 10') an jedem ihrer Enden einen mit den Niederhaltefedern (6, 6') in Kontakt bringbaren Halteabschnitt (18, 18') aufweist.

3. Scheibenbremse nach Anspruch 2,
**dadurch gekennzeichnet, dass** jeder Halteabschnitt (18, 18') in einem Endabschnitt der Spreizfeder (10, 10') angeformt und dazu eingerichtet ist, die Niederhaltefeder (6, 6') zumindest bereichsweise zu umgreifen.

4. Scheibenbremse nach Anspruch 2 oder 3,
wobei der Halteabschnitt (18, 18') außerhalb des Massenschwerpunktes der Spreizfeder (10, 10') angeordnet ist.

5. Scheibenbremse nach einem der Ansprüche 1 bis 4,
**dadurch gekennzeichnet, dass** das Führungsteil (20 - 20‴) als Stabelement ausgebildet und zumindest teilweise von der Spreizfeder (10, 10') umgeben ist.

6. Scheibenbremse nach einem der Ansprüche 1 bis 5,
**dadurch gekennzeichnet, dass** das Führungsteil (20) und die Spreizfeder (10, 10') in einer Ausnehmung (22) des Niederhaltebügels (8) zumindest in Wirkrichtung der Spreizfeder (10, 10') beweglich angeordnet sind.

7. Scheibenbremse nach einem der Ansprüche 1 bis 5 ,
wobei der Führungsdorn (24 - 24") ein erster Führungsdorn ist, und das Führungsteil (20' - 20‴) zusätzlich zum ersten Führungsdorn (24 - 24") einen zweiten Führungsdorn (26 - 26") aufweist, wobei der erste Führungsdorn (24 - 24") und der zweite Führungsdorn (26 - 26") sich von entgegengesetzten Enden des Niederhaltebügels (8' - 8^{IV}) aus aufeinander zu erstrecken, wobei der erste Führungsdorn (24, 24") und der zweite Führungsdorn (26, 26") vorzugsweise unterschiedlich lang sind.

8. Scheibenbremse nach Anspruch 7,
**dadurch gekennzeichnet, dass** zumindest einem Ende (14, 14') der Spreizfeder (10') ein Schieber (40, 40') zugeordnet ist, der entlang des Führungsteils (20", 20‴) beweglich ausgebildet ist, und vorzugsweise den Abstand (X₁) zwischen dem ersten Führungsdorn (24") und dem zweiten Führungsdorn (26") überdeckt.

9. Scheibenbremse nach Anspruch 7 oder 8,
**dadurch gekennzeichnet, dass** der erste Führungsdorn (24, 24') und der zweite Führungsdorn (26, 26') zum Einsetzen der Spreizfeder (10, 10') mit Abstand (X) zueinander enden, wobei der Abstand (X) zwischen den Enden von erstem und zweitem Führungsdorn (24, 24', 26, 26') kleiner ist als die Blocklänge L_{B} der Spreizfeder.

10. Scheibenbremse nach einem der Ansprüche 7 bis 9,
ferner aufweisend ein die Enden von erstem und zweitem Führungsdorn (24, 24', 26, 26') miteinander verbindendes Passteil (30) mit Halterungen (32) zum Befestigen am ersten und zweiten Führungsdorn (24, 24', 26, 26').

11. Scheibenbremse nach einem der Ansprüche 7 bis 10,
**dadurch gekennzeichnet, dass** zumindest der erste oder zweite Führungsdorn (24", 26") zwischen einer Betriebsstellung und einer Montagestellung zum Montieren der Spreizfeder (10, 10') hin und her bewegbar ist.

12. Scheibenbremse nach einem der vorstehenden Ansprüche,
ferner aufweisend eine Abdeckung (34), die dazu eingerichtet ist, die Spreizfeder (10, 10') an dem Niederhaltebügel (8 - 8^{IV}) zumindest abschnittsweise zu überdecken.

13. Scheibenbremse nach Anspruch 12,
wobei die Abdeckung (34) Teil einer den Bremssattel (3) an seiner Oberseite abschirmenden Abdeckkappe (38) ist.

14. Kit für einen Bremssattel (3) einer Scheibenbremse (1) nach einem der vorstehenden Ansprüche, aufweisend
einen Niederhaltebügel (8 - 8^{IV}),
eine Spreizfeder (10, 10'), deren Enden dazu eingerichtet sind, direkt mit jeweils einer Niederhaltefeder (6,6') in Anlage gebracht zu werden, und
ein die Spreizfeder (10, 10') zumindest abschnittsweise in Längsausrichtung aufnehmendes Führungsteil (20 - 20‴).

## Claims

1. A disc brake (1) for a motor vehicle, in particular a commercial vehicle, comprising
a brake disc (2),
a brake caliper (3) and two brake pads (4, 4') movably guided on the brake caliper (3) on both sides of the brake disc (2),
a hold-down spring (6, 6') on each brake pad (4, 4'),
a hold-down bracket (8 - 8^{IV}) for pre-tensioning the hold-down springs (6, 6') against the respective brake pad (4, 4'), and
a spreading spring (10, 10') which is designed to apply a spreading force in a direction of action between the brake pads (4, 4') and to move the brake pads (4, 4') away from one another,
wherein the ends of the spreading spring (10, 10') are in direct contact with one of the hold-down springs (6, 6'), wherein the disc brake has a guide part (20 - 20‴) which is designed to receive the spreading spring (10, 10') guided at least in portions in the direction of action of the spreading force, **characterized in that** the guide part (20' -20‴) has at least one first guide pin (24 - 24") which is arranged on the hold-down bracket (8' - 8^{IV}) and extends in a recess (22') on the hold-down bracket (8' - 8^{IV}).

2. The disc brake according to claim 1,
**characterized in that** the spreading spring (10, 10') has at each of its ends a holding portion (18, 18') which can be brought into contact with the hold-down springs (6, 6').

3. The disc brake according to claim 2,
**characterized in that** each holding portion (18, 18') is formed in an end portion of the spreading spring (10, 10') and is designed to encompass the hold-down spring (6, 6') at least in regions.

4. The disc brake according to either claim 2 or claim 3,
wherein the holding portion (18, 18') is arranged outside the center of mass of the spreading spring (10, 10').

5. The disc brake according to any of claims 1 to 4,
**characterized in that** the guide part (20 -20‴) is designed as a rod element and is at least partially surrounded by the spreading spring (10, 10').

6. The disc brake according to any of claims 1 to 5,
**characterized in that** the guide part (20) and the spreading spring (10, 10') are movably arranged in a recess (22) of the hold-down bracket (8) at least in the direction of action of the spreading spring (10, 10').

7. The disc brake according to any of claims 1 to 5,
wherein the guide pin (24 - 24") is a first guide pin, and the guide part (20' - 20‴) has a second guide pin (26 - 26") in addition to the first guide pin (24 - 24"), wherein the first guide pin (24 - 24") and the second guide pin (26 - 26") extend towards one another from opposite ends of the hold-down bracket (8' - 8^{IV}), wherein the first guide pin (24, 24") and the second guide pin (26, 26") are preferably of different lengths.

8. The disc brake according to claim 7,
**characterized in that** at least one end (14, 14') of the spreading spring (10') is associated with a slider (40, 40') which is designed to be movable along the guide part (20", 20‴) and preferably covers the distance (X₁) between the first guide pin (24") and the second guide pin (26").

9. The disc brake according to either claim 7 or claim 8,
**characterized in that** the first guide pin (24, 24') and the second guide pin (26, 26') terminate at a distance (X) from one another for inserting the spreading spring (10, 10'), wherein the distance (X) between the ends of the first and second guide pin (24, 24', 26, 26') is smaller than the block length L_{B} of the spreading spring.

10. The disc brake according to any of claims 7 to 9,
further comprising a fitting part (30), which connects the ends of the first and second guide pins (24, 24', 26, 26') to one another, with holders (32) for fastening to the first and second guide pins (24, 24', 26, 26').

11. The disc brake according to any of claims 7 to 10,
**characterized in that** at least the first or second guide pin (24", 26") can be moved back and forth between an operating position and a mounting position for mounting the spreading spring (10, 10').

12. The disc brake according to any of the preceding claims,
further comprising a cover (34) which is designed to cover the spreading spring (10, 10') on the hold-down bracket (8 - 8^{IV}) at least in portions.

13. The disc brake according to claim 12,
wherein the cover (34) is part of a cover cap (38) shielding the brake caliper (3) on its upper side.

14. A kit for a brake caliper (3) of a disc brake (1) according to any of the preceding claims, comprising a hold-down bracket (8 - 8^{IV}),
a spreading spring (10, 10'), the ends of which are designed to be brought into direct contact with a respective hold-down spring (6, 6'), and a guide part (20 - 20‴) which receives the spreading spring (10, 10') at least in portions in the longitudinal direction.

## Revendications

1. Frein à disque (1) pour un véhicule automobile, en particulier un véhicule utilitaire, comportant
un disque de frein (2),
un étrier de frein (3) et deux garnitures de frein (4, 4') guidées de manière à pouvoir se déplacer sur l'étrier de frein (3) des deux côtés du disque de frein (2),
un ressort de maintien (6, 6') sur chaque garniture de frein (4, 4'),
un étrier de maintien (8 - 8^{IV}) permettant de précontraindre les ressorts de maintien (6, 6') à l'encontre de la garniture de frein (4, 4') respective, et
un ressort d'écartement (10, 10') qui est conçu pour appliquer une force d'écartement entre les garnitures de frein (4, 4') dans une direction d'action et pour déplacer les garnitures de frein (4, 4') de manière à les éloigner l'une de l'autre,
dans lequel les extrémités du ressort d'écartement (10, 10') sont placées directement sur respectivement l'un des ressorts de maintien (6, 6'), dans lequel le frein à disque présente une pièce de guidage (20 - 20‴) qui est conçue pour recevoir le ressort d'écartement (10, 10') guidé au moins dans certaines sections dans la direction d'action de la force d'écartement, **caractérisé en ce que** la pièce de guidage (20' - 20‴) présente au moins un premier mandrin de guidage (24 - 24") qui est disposé sur l'étrier de maintien (8' - 8^{IV}) et s'étend dans un évidement (22') sur l'étrier de maintien (8' - 8^{IV}).

2. Frein à disque selon la revendication 1,
**caractérisé en ce que** le ressort d'écartement (10, 10') présente à chacune de ses extrémités une section de retenue (18, 18') pouvant être mise en contact avec les ressorts de maintien (6, 6').

3. Frein à disque selon la revendication 2,
**caractérisé en ce que** chaque section de retenue (18, 18') est formée dans une section d'extrémité du ressort d'écartement (10, 10') et est conçue pour entourer au moins dans certaines zones le ressort de maintien (6, 6').

4. Frein à disque selon la revendication 2 ou 3,
dans lequel la section de retenue (18, 18') est disposée à l'extérieur du centre de gravité de masse du ressort d'écartement (10, 10').

5. Frein à disque selon l'une des revendications 1 à 4,
**caractérisé en ce que** la pièce de guidage (20 - 20‴) est réalisée sous forme d'élément en forme de tige et est encerclée au moins partiellement par le ressort d'écartement (10, 10').

6. Frein à disque selon l'une des revendications 1 à 5,
**caractérisé en ce que** la pièce de guidage (20) et le ressort d'écartement (10, 10') sont disposés de manière à pouvoir se déplacer dans un évidement (22) de l'étrier de maintien (8) au moins dans la direction d'action du ressort d'écartement (10, 10').

7. Frein à disque selon l'une des revendications 1 à 5,
dans lequel le mandrin de guidage (24 - 24") est un premier mandrin de guidage, et la pièce de guidage (20' - 20‴) présente, outre le premier mandrin de guidage (24 - 24"), un second mandrin de guidage (26 - 26"), dans lequel le premier mandrin de guidage (24 - 24") et le second mandrin de guidage (26 - 26") s'étendent l'un sur l'autre à partir d'extrémités opposées de l'étrier de maintien (8' - 8^{IV}), dans lequel le premier mandrin de guidage (24, 24") et le second mandrin de guidage (26, 26") sont de préférence de longueurs différentes.

8. Frein à disque selon la revendication 7,
**caractérisé en ce qu'**au moins une extrémité (14, 14`) du ressort d'écartement (10') est associée à un coulisseau (40, 40') qui est réalisé de manière à pouvoir se déplacer le long de la pièce de guidage (20", 20‴) et qui recouvre de préférence la distance (X₁) entre le premier mandrin de guidage (24") et le second mandrin de guidage (26").

9. Frein à disque selon la revendication 7 ou 8,
**caractérisé en ce que** le premier mandrin de guidage (24, 24') et le second mandrin de guidage (26, 26') s'arrêtent à une distance (X) l'un de l'autre pour l'insertion du ressort d'écartement (10, 10'), dans lequel la distance (X) entre les extrémités du premier et du second mandrin de guidage (24, 24', 26, 26') est inférieure à la longueur d'aplatissement maximum L_{B} du ressort d'écartement.

10. Frein à disque selon l'une des revendications 7 à 9,
présentant en outre une pièce d'ajustement (30) reliant les extrémités du premier et du second mandrin de guidage (24, 24', 26, 26') les unes aux autres et comportant des dispositifs de retenue (32) pour la fixation au premier et au second mandrin de guidage (24, 24', 26, 26').

11. Frein à disque selon l'une des revendications 7 à 10,
**caractérisé en ce qu'**au moins le premier ou le second mandrin de guidage (24", 26") peut se déplacer en va-et-vient entre une position de fonctionnement et une position de montage pour le montage du ressort d'écartement (10, 10').

12. Frein à disque selon l'une des revendications précédentes,
présentant en outre un élément de recouvrement (34) qui est conçu pour recouvrir au moins dans certaines sections le ressort d'écartement (10, 10') sur l'étrier de maintien (8 - 8^{IV}).

13. Frein à disque selon la revendication 12,
dans lequel l'élément de recouvrement (34) fait partie d'un capuchon (38) protégeant l'étrier de frein (3) sur sa face supérieure.

14. Kit pour un étrier de frein (3) d'un frein à disque (1) selon l'une des revendications précédentes, présentant un étrier de maintien (8 - 8^{IV}),
un ressort d'écartement (10, 10') dont les extrémités sont conçues pour être placées directement sur respectivement un ressort de maintien (6, 6'), et une pièce de guidage (20 - 20‴) recevant le ressort d'écartement (10, 10') au moins dans certaines sections en orientation longitudinale.
